# EUROPEAN PATENT SPECIFICATION

(11) **EP 4 482 448 B1**
(45) Date of publication and mention of the grant of the patent: **12.11.2025**
(21) Application number: 23704329.4
(22) Date of filing: 08.02.2023
(51) Int. Cl.: A61J 17/00

(54) **PACIFIERS AND METHODS FOR MAKING PACIFIERS**
SCHNULLER UND VERFAHREN ZUR HERSTELLUNG VON SCHNULLERN
SUCETTES ET PROCÉDÉS DE FABRICATION DE SUCETTES

(30) Priority: 25.02.2022 US 202263268562 P
(43) Date of publication of application: 01.01.2025
(73) Proprietor: MAPA GmbH, 27404 Zeven (DE)
(72) Inventor: LOEHN, Juergen, 27404 Zeven (DE); HOLSCHUMACHER, Ralf, 27404 Zeven (DE); WAGENKNECHT, Uwe, 27404 Zeven (DE); WARDEN, Bodo, 27407 Zeven (DE)
(74) Representative: Cabinet Beau de Loménie
(86) International application number: PCT/EP2023/053109
(87) International publication number: WO 2023/161026

(56) References cited:
- DE-A1- 3 316 824
- US-B1- 6 228 105
- US-B2- 9 095 501

## Description

### TECHNICAL FIELD

The present disclosure relates generally to pacifiers and methods for making pacifiers.

### BACKGROUND

A pacifier may be used to soothe an infant, for example, by being placed in the infant's mouth. Pacifiers may be susceptible to accumulating dust, debris, or other contaminants.

A need remains for pacifiers that promote cleanliness and hygiene. Document US9095501 discloses a pacifier with a shield having small holes centrally located to allow interlocking between a soft baglet covering the shield and the shield.

### SUMMARY

The present disclosure describes pacifiers and methods for making pacifiers. Pacifiers according to the present disclosure may promote cleanliness and hygiene, for example, by reducing or preventing the accumulation of dust, debris, or other contaminants in one or more regions or portions of the pacifiers. For example, an interface between a frame and a mouth shield of a pacifier may be substantially continuous or gap-free.

In aspects, a pacifier according to the present disclosure includes a frame and a mouth shield secured to the frame at least partially by an overmold. An interface between the mouth shield and the frame is continuous.

In aspects, a method for making a pacifier according to the present disclosure includes securing a frame in a shield mold defining a mouth shield cavity. The method may further include introducing a curable precursor material into the shield mold. The method may further include overmolding at least a portion of the curable material across at least a portion of the frame in the mold. The method may further include allowing the curable material to cure in the mouth shield cavity into a mouth shield at least partially secured to the frame by an overmold. An interface between the mouth shield and the frame is continuous. The invention is defined by the appended claims.

### BRIEF DESCRIPTION OF THE DRAWINGS

FIG. 1A is a side perspective view of a pacifier including a mouth shield secured to a frame.
FIG. 1B is a rear perspective view of the pacifier of FIG. 1A.
FIG. 2A is a front perspective view of a pacifier including the mouth shield and the frame of FIG. 1A and a handle.
FIG. 2B is a rear perspective view of the pacifier of FIG. 2A.
FIG. 2C is a partial cross-sectional view of the pacifier of FIG. 2A.

The detailed description is set forth with reference to the accompanying drawings. The drawings are provided for purposes of illustration only and merely depict example embodiments of the disclosure. The drawings are provided to facilitate understanding of the disclosure and shall not be deemed to limit the breadth, scope, or applicability of the disclosure. The use of the same reference numerals indicates similar, but not necessarily the same or identical components. Different reference numerals may be used to identify similar components. Various embodiments may utilize elements or components other than those illustrated in the drawings, and some elements and/or components may not be present in various embodiments. The use of singular terminology to describe a component or element may, depending on the context, encompass a plural number of such components or elements and vice versa.

### DETAILED DESCRIPTION

The present disclosure describes pacifiers and methods for making pacifiers. In aspects, pacifiers according to the present disclosure have a mouth shield secured to a frame by an overmold portion. The overmold portion allows a substantially gap-free coupling between the mouth shield and the frame.

Pacifiers may be fabricated using different materials and techniques to provide a soft portion. For example, an entire suction cup of a pacifier may be made from silicone. Such pacifiers may include a relatively thick mouth shield, to prevent unintentional chewing or advancing into the mouth. However, such suction cups are relatively heavy, and may not have a pleasant appearance. Instead of an entirely silicone suction cup, some pacifiers may integrate a small frame for stabilization. The frame may be mechanically connected to a silicone portion filigree. However, such pacifiers may present small gaps, for example, between the frame and silicone, in which dust or debris may accumulate. Assembly of such pacifiers may be difficult to automate.

Pacifiers according to the present disclosure may advantageously include a silicone portion bonded, for example, overmolded, about a stabilizing frame, for example, a thermoplastic frame. Gaps may be absent or substantially absent from pacifiers according to the present disclosure. The present disclosure also describes methods for manufacturing pacifiers. In aspects, the methods may be amenable to automation, and be more suitable to automate compared to other methods for manufacturing or assembling pacifiers.

In aspects, a pacifier according to the present disclosure includes a frame and a mouth shield secured to the frame at least partially by an overmold. An interface between the mouth shield and the frame is continuous.

In aspects, a method for making a pacifier according to the present disclosure includes securing a frame in a shield mold defining a mouth shield cavity. The method may further include introducing a curable precursor material into the shield mold. The method may further include overmolding at least a portion of the curable material across at least a portion of the frame in the mold. The method may further include allowing the curable material to cure in the mouth shield cavity into a mouth shield at least partially secured to the frame by an overmold. An interface between the mouth shield and the frame is continuous.

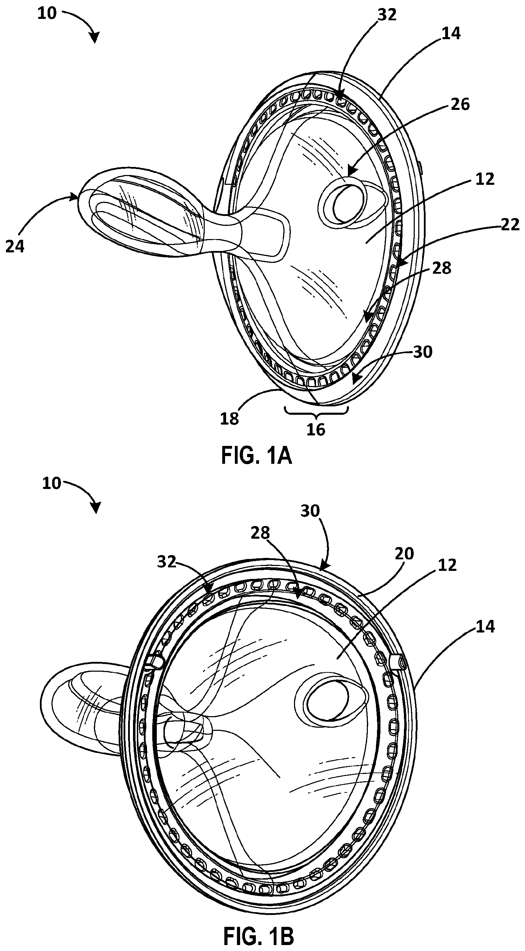

FIG. 1A is a side perspective view of a pacifier 10 including a mouth shield 12 secured to a frame 14. FIG. 1B is a rear perspective view of the pacifier 10 of FIG. 1A.

The mouth shield 12 is secured to the frame 14 at least partially by an overmold 16. The overmold 16 extends across the frame 14, for example, across a portion of the frame 14 between a first surface 18 of frame 14 and a second surface 20 of frame 14. The overmold 16 may be integrally formed with the mouth shield 12, or may be a portion of mouth shield 12 that contacts the frame 14. For example, the overmold 16 may simply be a region or portion of the mouth shield 12.

In aspects, an interface 22 between the mouth shield 12 and the frame 14 is continuous. For example, the interface 22 may be substantially or essentially free of gaps or voids visible to the unaided eye. In aspects, the interface 22 may provide a substantially smooth transition between the mouth shield 12 and the frame 14, so that there is substantial tactile bump or ridge between neighboring portions of the mouth shield 12 and the frame 14.

In aspects, the mouth shield 12 is formed of a soft material. In aspects, the soft material includes silicone. In some such aspects, the soft material consists of silicone. In some aspects, the mouth shield consists of or consists essentially of silicone.

In aspects, the frame 14 is formed of a rigid material. In some such aspects, the rigid material includes a polymer. In some aspects, the rigid material includes a thermoplastic. In some aspects, the frame 14 consists of or consists essentially of a thermoplastic.

The silicone of the mouth shield 12 may advantageously bond with the thermoplastic of the frame 14. For example, the rigid material of the frame 14 may include a thermoplastic chemically bonded to the silicone of the soft material of the mouth shield 12. The bond between the materials of the mouth shield 12 and the frame 14 may facilitate securement and retention of the mouth shield 12 to the frame 14 without the formation of gaps or voids at the interface 22.

The pacifier 10 may further include a nipple 24. In aspects, the nipple 24 may integrally extend from the mouth shield 12. In aspects, a contoured portion of the mouth shield 12 may form the nipple 24. When the nipple 24 is in use, the mouth shield 12 may shield the face or the mouth from an exterior environment. The nipple 24 may have any suitable shape, size, contour, or form amenable to retention in the mouth.

In aspects, the mouth shield 12 may define at least one respiratory opening 26. The respiratory opening 26 may promote the transfer of air, oxygen, carbon dioxide, moisture, or another fluid across the mouth shield 12. In aspects, the respiratory opening 26 maintains or promotes a comfortable environment between the face or the mouth and the pacifier.

In aspects, the mouth shield 12 defines a shield rim 28. For example, the shield rim 28 may be a peripheral region along an edge of the mouth shield 12. In aspects, the shield rim 28 may extend circumferentially about an entirety of the mouth shield 12. In aspects, the shield rim 28 is at least partially overmolded across at least a portion of the frame 14. For example, the shield rim 28 may contact both first surface 18 and second surface 20 of the frame 14. In aspects, the frame 14 may define an interior edge or periphery facing a geometric center of the pacifier 10, and the shield rim may cover the interior edge or periphery of the frame 14. In aspects, the shield rim 28 is overmolded about the frame 14 to contact both the first frame surface 18 and the second frame surface 20.

In aspects, the frame 14 defines a frame rim 30. In some such aspects, an entirety of the shield rim 28 may be overmolded along an entirety of the frame rim 30. In aspects, the frame rim 30 may substantially or completely surround a geometric center of the pacifier 10. In aspects, the frame rim 30 circumferentially surrounds the shield rim 28.

The frame 14 or the frame rim 30 may provide and maintain a shape of the pacifier. For example, the mouth shield 12 may be relatively soft, and the frame 14 or the frame 30 may be relatively more rigid, and thus, promote retaining a contour, shape, configuration, or arrangement of the mouth shield 12, and of the pacifier 10 as a whole.

In aspects, the frame 14 defines a plurality of openings 32 extending across the frame 14 from the first frame surface 18 to the second frame surface 20. In some such aspects, at least a portion of the mouth shield 12 integrally extends through the plurality of openings 32 of the frame. For example, a portion of the shield rim 28 may integrally extend through the plurality of openings 32. The extending of mouth shield 12 through the plurality of openings 32 promotes securing of the mouth shield 12 to the frame 14. Thus, ultimately, the mouth shield 12 may be secured to and retained to the frame 14, for example, by one or more of the extending through the plurality of openings 32, by the bond between materials of the mouth shield 12 and the frame 14, and by the overmold of the mouth shield 12 with respect to the frame 14. In aspects, the frame rim 30 defines the plurality of openings 32, and the shield rim 28 integrally extends through the plurality of openings 32, for example, in contact with the frame rim 30.

The plurality of openings 32 may be distributed or arranged on the frame 14 in any suitable or predetermined configuration or pattern. For example, the plurality of openings 32 may be distributed along the frame rim 30. In some aspects, the plurality of openings 32 is distributed symmetrically along the frame rim 30. In aspects, the plurality of openings 32 is distributed symmetrically along the frame rim 30 about a geometric center of the frame rim 30. For example, the plurality of openings 32 may be disposed at locations opposed across the geometric center and along the frame rim 30. In some aspects, the plurality of openings 32 may be substantially uniformly spaced along the frame 14, or along the frame rim 30. While a single row of openings is shown in FIGS. 1A and 1B, the openings 32 may be arranged in two or more rows, or a staggered locations, or zig-zag, or as a grid. The pattern of distribution of the openings 32 may be uniform or non-uniform. For example, some sub-pluralities of the openings 32 may be relatively closer to their neighbors compared to other openings.

The openings 32 may have any suitable cross-sectional shape or periphery, and may have any suitable 3-dimensional shape across the frame 14. For example, the openings 32 may have circular, oval, square, rounded square, curved, polygonal, or any predetermined shape, cross-section, or contour. The openings 32 may each have substantially the same shape and cross-section, or may differ in such aspects.

In aspects, the plurality of openings 32 have respective circular cross-sections in a direction across the frame rim 14. In aspects, the plurality of openings 32 have a same diameter.

To facilitate handling, holding, gripping, and cleaning the pacifier, and to promote cleanliness and hygiene, the pacifier may be provided with a handle spaced from the mouth shield.

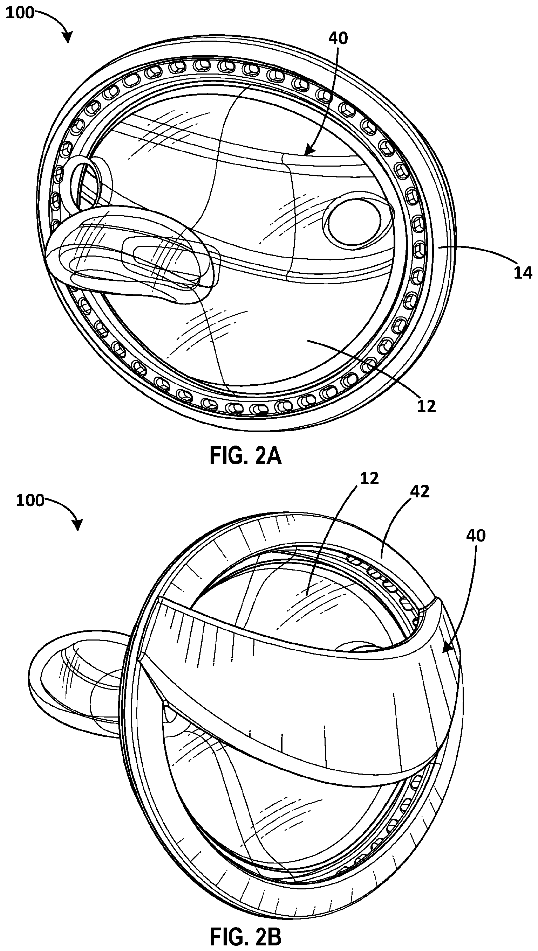

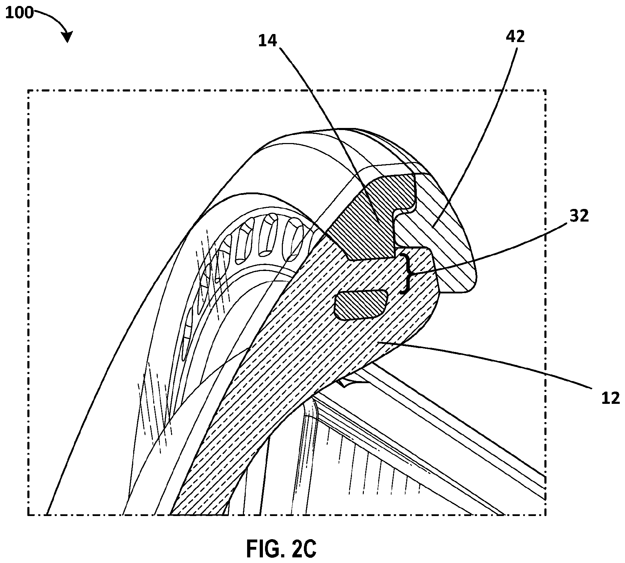

FIG. 2A is a front perspective view of a pacifier 100 including the mouth shield 12 and the frame 14 of FIG. 1A and a handle 40. FIG. 2B is a rear perspective view of the pacifier 100 of FIG. 2A. FIG. 2C is a partial cross-sectional view of the pacifier 100 of FIG. 2A.

The mouth shield 12 and the frame 14 may be configured as described with reference to the pacifier 10 of FIGS. 1A and 1B. In aspects, the handle may be secured to one or both of the mouth shield 12, the frame 14, or to some other component. In aspects, the handle 40 is secured to the frame 14. In some such aspects, the handle 40 is secured to the frame 14 and opposing the mouth shield 12. In aspects, the handle 40 may be secured directly to the frame 14. In other aspects, the handle 40 may be secured to a handle frame 42, and the handle frame 42 may be secured to one or both of the mouth shield 12, the frame 14, or some other component. For example, the handle frame 42 may be secured to the frame 14 on a side opposed to the mouth shield 12, and the handle 40 may be secured to the handle frame 42. In aspects, the handle 40 may integrally extend from the handle frame 42. One or both of the handle 40 or the handle frame 42 may be formed of the same or similar material as the frame 14.

The handle 40 may extend in a generally straight line or a flat three-dimensional plane across a side of the frame 14 opposing the mouth shield 12, or may be curved or contoured. In aspects, the handle 40 may be ergonomically contoured to facilitate holding, grabbing, gripping, manipulating, or cleaning the pacifier 100. The handle 40 may be welded (for example, by plastic weld), adhered, or molded to or over one or more portions of the pacifier 100. In aspects, the handle 40 may be removably secured to the frame 14 by a friction fit, compression fit, or interference fit, or via clips or fasteners. Such removable securement may facilitate cleaning. In other aspects, the handle 40 may be permanently secured to the frame 14, for example, such that the handle 40 cannot be removed from the frame 14 without at least partially damaging the pacifier 100.

Pacifiers according to the disclosure may promote cleanliness and hygiene, for example, by reducing or preventing gap or void formation between various components of the pacifiers, while providing an elegant and appealing design. Components of the pacifiers according to the disclosure may also provide better securement or retention to the pacifier, and withstand a relatively large magnitude of forces and pressures during use without unintentional separation or breakage.

Pacifiers according to the disclosure may be manufactured using any suitable manufacturing or assembly process. Certain methods are described herein, with reference to the pacifier 10 of FIG. 1A and pacifier 100 of FIG. 2A to facilitate the description. Methods according to the disclosure may be used to manufacture any pacifier according to the disclosure. It will also be appreciated that pacifier 10 of FIG. 1A may be converted to pacifier 100 of FIG. 2A, for example, by securing the handle 40 to the pacifier 10. In some aspects, the pacifier 10 of FIG. 1A represents an interim state of manufacturing of the pacifier 100 of FIG. 2A.

In aspects, a method of making a pacifier 10 or 100 includes securing the frame 14 in a shield mold defining a mouth shield cavity. The method may further include introducing a curable precursor material into the shield mold. The method may further include overmolding at least a portion of the curable material across at least a portion of the frame 14 in the mold. The method may further include allowing the curable material to cure in the mouth shield cavity into the mouth shield 12 at least partially secured to the frame 14 by the overmold 16. The interface 22 between the mouth shield 12 and the frame 14 may be continuous.

The curing may be initiated, induced, maintained, or completed by one or more of thermal curing, chemical curing, ultraviolet curing, or any other means for curing. The term curing encompasses the formation of an increasing density of cross-links within a polymeric material, or solidification from a liquid or gel state into a solid, elastic, or rubbery state.

In aspects, the method may further include introducing a frame material into a frame mold and allowing the frame material to set in the frame mold to form the frame 14.

In aspects, the method may further include securing the handle 40 to the frame 14 opposing the mouth shield 12. In some aspects, the securing the handle 40 to the frame 14 comprises welding the handle 40 to the frame 14.

In aspects, the method may further include introducing a handle material into a handle mold and allowing the handle material to set in the handle mold to form the handle 40.

In aspects, the shield material may include a polymer, for example, an elastomeric polymer. In some aspects, the shield material includes silicone.

In aspects, one or both of the frame material or the handle material comprises a polymer. In aspects, the polymer includes a thermoplastic. The thermoplastic may include polypropylene (PP), polyethylene (PE), polyethylene terephthalate (PET) or any other suitable thermoplastic. The polymer may be an uncured or partially cured precursor, which may cure to form a final polymeric matrix. In some aspects, the shield material, the frame material, or the handle material may include a curable composition that forms a polymer upon curing. In some aspects, the curable composition may be a two-part or multi-part composition in which curing is initiated by mixing the two or more parts, for example, chemical or catalyzed curing.

One or more illustrative embodiments of the disclosure have been described above. The above-described embodiments are merely illustrative of the scope of this disclosure and are not intended to be limiting in any way. Accordingly, variations, modifications, and equivalents of the embodiments disclosed herein are also within the scope of this disclosure.

While the present disclosure has been described with reference to a number of embodiments, it will be understood by those skilled in the art that the invention is not limited to such disclosed embodiments. Additionally, while various embodiments of the invention have been described, it is to be understood that aspects of the invention may include only some of the described embodiments. Accordingly, the invention is not to be seen as limited by the foregoing description, but is only limited by the scope of the appended claims.

## Claims

1. A pacifier (10) comprising:
a frame (14); and
a mouth shield (12) secured to the frame at least partially by an overmold (16),
wherein an interface between the mouth shield and the frame is continuous,
wherein the mouth shield defines a shield rim,
wherein the frame (14) defines a frame rim (30), and wherein an entirety of the shield rim is overmolded along an entirety of the frame rim (30);
wherein the frame (14) defines a plurality of openings (32) extending across the frame (14) from a first frame surface (18) to a second frame surface (20), and wherein at least a portion of the mouth shield integrally extends through the plurality of openings (32) of the frame;
and wherein the plurality of openings (32) is distributed along the frame rim (30).

2. The pacifier of claim 1, wherein the frame rim (30) defines the plurality of openings (32), and wherein the shield rim (28) integrally extends through the plurality of openings (32).

3. The pacifier of claim 1 or 2, wherein the plurality of openings (32) is distributed symmetrically along the frame rim (30), optionally wherein the plurality of openings (32) is distributed symmetrically along the frame rim (30) about a geometric center of the frame rim (30).

4. The pacifier of any of claims 1 to 3, wherein the plurality of openings (32) have respective circular cross-sections in a direction across the frame rim (30), optionally wherein the plurality of openings (32) have a same diameter.

5. The pacifier of any of claims 1 to 4, wherein the shield rim (28) is overmolded about the frame to contact both the first frame surface (18) and the second frame surface (20).

6. The pacifier of any of claims 1 to 5, wherein the frame rim (30) circumferentially surrounds the shield rim (28).

7. The pacifier of any of claims 1 to 6, wherein the frame (14) is formed of a rigid material and wherein the mouth shield is formed of a soft material, the rigid material being comparatively more rigid than the soft material.

8. The pacifier of claim 7, wherein the rigid material comprises a polymer, optionally wherein the rigid material comprises a thermoplastic.

9. The pacifier of claim 7 or 8, wherein the soft material comprises silicone.

10. The pacifier of any of claims 7 to 9, wherein the rigid material of the frame (14) comprises a thermoplastic chemically bonded to the silicone of the soft material of the mouth shield (12).

11. The pacifier of any of claims 1 to 10, further comprising a handle (40) secured to the frame (14) and opposing the mouth shield (12).

12. The pacifier of claim 11, wherein the handle material comprises a polymer, optionally wherein the handle material comprises a thermoplastic.

13. The pacifier of any of claims 1 to 12, wherein a nipple (24) integrally extends from the mouth shield (12).

## Patentansprüche

1. Schnuller (10), umfassend:
einen Rahmen (14); und
einen Mundschutz (12), der zumindest teilweise durch eine Umspritzung (16) an dem Rahmen befestigt ist,
wobei eine Schnittstelle zwischen dem Mundschutz und dem Rahmen durchgehend ist,
wobei der Mundschutz einen Schutzrand definiert,
wobei der Rahmen (14) einen Rahmenrand (30) definiert, und wobei eine Gesamtheit des Schutzrands entlang einer Gesamtheit des Rahmenrands (30) umspritzt ist;
wobei der Rahmen (14) eine Vielzahl von Öffnungen (32) definiert, die sich von einer ersten Rahmenfläche (18) zu einer zweiten Rahmenfläche (20) über den Rahmen (14) erstrecken, und wobei sich mindestens ein Teil des Mundschutzes einstückig durch die Vielzahl von Öffnungen (32) des Rahmens erstreckt;
und wobei die Vielzahl von Öffnungen (32) entlang des Rahmenrands (30) verteilt ist.

2. Schnuller nach Anspruch 1, wobei der Rahmenrand (30) die Vielzahl von Öffnungen (32) definiert, und wobei sich der Schutzrand (28) einstückig durch die Vielzahl von Öffnungen (32) erstreckt.

3. Schnuller nach Anspruch 1 oder 2, wobei die Vielzahl von Öffnungen (32) symmetrisch entlang des Rahmenrands (30) verteilt ist, optional wobei die Vielzahl von Öffnungen (32) um einen geometrischen Mittelpunkt des Rahmenrands (30) symmetrisch entlang des Rahmenrands (30) verteilt ist.

4. Schnuller nach einem der Ansprüche 1 bis 3, wobei die Vielzahl von Öffnungen (32) jeweils einen kreisförmigen Querschnitt in einer Richtung quer zu dem Rahmenrand (30) aufweisen, optional wobei die Vielzahl von Öffnungen (32) einen gleichen Durchmesser aufweisen.

5. Schnuller nach einem der Ansprüche 1 bis 4, wobei der Schutzrand (28) um den Rahmen umspritzt ist, um sowohl die erste Rahmenfläche (18) als auch die zweite Rahmenfläche (20) zu berühren.

6. Schnuller nach einem der Ansprüche 1 bis 5, wobei der Rahmenrand (30) den Schutzrand (28) in Umfangsrichtung umgibt.

7. Schnuller nach einem der Ansprüche 1 bis 6, wobei der Rahmen (14) aus einem starren Material gebildet ist, und wobei der Mundschutz aus einem weichen Material gebildet ist, wobei das starre Material vergleichsweise starrer ist als das weiche Material.

8. Schnuller nach Anspruch 7, wobei das starre Material ein Polymer umfasst, optional wobei das starre Material ein Thermoplast umfasst.

9. Schnuller nach Anspruch 7 oder 8, wobei das weiche Material Silikon umfasst.

10. Schnuller nach einem der Ansprüche 7 bis 9, wobei das starre Material des Rahmens (14) einen thermoplastischen Kunststoff umfasst, der chemisch mit dem Silikon des weichen Materials des Mundschutzes (12) verbunden ist.

11. Schnuller nach einem der Ansprüche 1 bis 10, ferner umfassend einen Griff (40), der an dem Rahmen (14) und gegenüber dem Mundschutz (12) befestigt ist.

12. Schnuller nach Anspruch 11, wobei das Griffmaterial ein Polymer umfasst, optional wobei das Griffmaterial einen thermoplastischen Kunststoff umfasst.

13. Schnuller nach einem der Ansprüche 1 bis 12, wobei sich ein Nippel (24) einstückig von dem Mundschutz (12) erstreckt.

## Revendications

1. Sucette (10) comprenant :
un cadre (14) ; et
une protection buccale (12) fixée au cadre au moins partiellement par un surmoule (16),
dans laquelle une interface entre la protection buccale et le cadre est continue, dans laquelle la protection buccale définit un bord de protection,
dans laquelle le cadre (14) définit un bord de cadre (30), et dans laquelle une intégralité du bord de protection est surmoulée le long d'une intégralité du bord de cadre (30) ;
dans laquelle le cadre (14) définit une pluralité d'ouvertures (32) s'étendant sur le cadre (14) à partir d'une première surface de cadre (18) jusqu'à une deuxième surface de cadre (20), et dans laquelle au moins une partie de la protection buccale s'étend, de manière solidaire, à travers la pluralité d'ouvertures (32) du cadre ;
et dans laquelle la pluralité d'ouvertures (32) est répartie le long du bord de cadre (30).

2. Sucette selon la revendication 1, dans laquelle le bord de cadre (30) définit la pluralité d'ouvertures (32), et dans laquelle le bord de protection (28) s'étend, de manière solidaire, à travers la pluralité d'ouvertures (32).

3. Sucette selon la revendication 1 ou 2, dans laquelle la pluralité d'ouvertures (32) est répartie de manière symétrique le long du bord de cadre (30), facultativement dans laquelle la pluralité d'ouvertures (32) est répartie, de manière symétrique, le long du bord de cadre (30) autour d'un centre géométrique du bord de cadre (30).

4. Sucette selon l'une quelconque des revendications 1 à 3, dans laquelle la pluralité d'ouvertures (32) ont des sections transversales circulaires respectives dans une direction sur le bord de cadre (30), facultativement dans laquelle la pluralité d'ouvertures (32) ont un même diamètre.

5. Sucette selon l'une quelconque des revendications 1 à 4, dans laquelle le bord de protection (28) est surmoulé autour du cadre pour être en contact à la fois avec la première surface de cadre (18) et la deuxième surface de cadre (20).

6. Sucette selon l'une quelconque des revendications 1 à 5, dans laquelle le bord de cadre (30) entoure le bord de protection (28) de manière circonférentielle.

7. Sucette selon l'une quelconque des revendications 1 à 6, dans laquelle le cadre (14) est formé avec un matériau rigide et dans laquelle la protection buccale est formée avec un matériau souple, le matériau rigide étant comparativement plus rigide que le matériau souple.

8. Sucette selon la revendication 7, dans laquelle le matériau rigide comprend un polymère, facultativement dans laquelle le matériau rigide comprend un thermoplastique.

9. Sucette selon la revendication 7 ou 8, dans laquelle le matériau souple comprend la silicone.

10. Sucette selon l'une quelconque des revendications 7 à 9, dans laquelle le matériau rigide du cadre (14) comprend un thermoplastique chimiquement relié à la silicone du matériau souple de la protection buccale (12).

11. Sucette selon l'une quelconque des revendications 1 à 10, comprenant en outre une poignée (40) fixée au cadre (14) et en opposition avec la protection buccale (12).

12. Sucette selon la revendication 11, dans laquelle le matériau de poignée comprend un polymère, facultativement dans laquelle le matériau de poignée comprend un thermoplastique.

13. Sucette selon l'une quelconque des revendications 1 à 12, dans laquelle une tétine (24) s'étend, de manière solidaire, à partir de la protection buccale (12).
